# EUROPEAN PATENT APPLICATION

(11) **EP 1 481 623 A1**
(43) Date of publication of application: **01.12.2004**
(21) Application number: 04012237.6
(22) Date of filing: 24.05.2004
(51) Int. Cl.: A47J 37/07, F24C 7/08

(54) **Food cooking device with heat source above the food**

(30) Priority: 29.05.2003 IT TV20030084; 28.10.2003 IT TV20030147
(71) Applicant: MYTYM S.R.L., 31033 Castelfranco Veneto (Treviso) (IT)
(72) Inventor: Cavallin, Camillo, 31050 Vedelago(Treviso) (IT)
(74) Representative: Modiano, Guido, Dr.-Ing.

(57) **Abstract**

A food cooking device (1), comprising a frame (2) with which a first support (13) for the food is associated, and at least one second support (21), which is detachably associated with the frame in a position that lies above the first support and at a chosen distance therefrom, the second support being provided with elements (26) for transmitting and/or propagating heat toward the underlying first support.

## Description

The present invention relates to a device for cooking food, such as for example meat and fish.

Nowadays it is known to use, for barbecuing preset kinds of food such as meat and fish, iron or steel grills, which are obtained by welding perimetrically to a frame, which usually has a rectangular plan shape and is provided with legs, a mesh or cross-members, which are mutually spaced so as to allow partial exposure of the food to the heat of the underlying embers.

Grills are also known which have a tray for containing firewood, which is arranged below and approximately parallel to a metal mesh for supporting the food to be cooked.

The main drawback of the use of these known types of grill is that the heat produced by the combustion of the wood, propagated toward the overlying metal mesh, causes the fat or oils released by the food to fall onto the embers and catch fire, burning the overlying food and producing residual fumes which, in addition to being unpleasant, may also contaminate the surrounding environment and therefore be unhealthy.

As a partial solution to the drawback due to fumes, it is also known to use fireplaces, electric cooking ranges or gas-fired cookers provided with devices for aspirating said fumes and the vapors released during food cooking.

The main drawback of fireplaces, cooking ranges and gas-fired cookers of the known type is that they are installed or built-in in fixed locations and therefore cannot be easily transported so as to allow their use in other indoor and outdoor environments.

Another drawback is that in any case, even in the presence of appropriate extractors, expelling the fumes from preset environments can be a problem and therefore can be achieved only partially, for example due to limited draft provided by the stack of a given fireplace located inside a room.

In any case, the food can be partially burnt, either due to the vicinity of the underlying embers, which can produce flames, or due to the oil or fat, which can burn.

The aim of the present invention is to solve the above-mentioned problems, eliminating the drawbacks of the cited known art, by providing a device that allows to cook food in a healthy way, preventing the food from being burnt and preventing the onset of noxious or otherwise polluting fumes.

Within this aim, an object of the present invention is to provide a device that allows to achieve optimum food cooking so as to keep substantially unchanged the organoleptic characteristics and the original taste of said food.

Another object is to provide a device that can be moved and/or transported easily, so that it can be used in various indoor and outdoor environments.

Another object is to provide a device that is constituted by a limited number of components and can be installed rapidly and easily in any kind of environment.

A further object is to provide a device that is reliable over time and therefore is scarcely susceptible to wear and deterioration.

A still further object is to obtain a device that allows to cook any kind of food rapidly and in an optimum manner.

Another object is to provide a device that is structurally simple and has low manufacturing costs.

This aim and these and other objects that will become better apparent hereinafter are achieved by a food cooking device, characterized in that it comprises a frame with which a first support for said food and at least one second support are associated, said second support being detachably associated with said frame in a position that lies above said first support, at a chosen distance therefrom, and being provided with means for transmitting and/or propagating heat toward said underlying first support.

Advantageously, said first support can be extracted by sliding from said frame so that it is arranged at least partially outside the footprint of said overlying second support.

Further characteristics and advantages of the present invention will become better apparent from the following detailed description of a particular but not exclusive embodiment thereof, illustrated by way of nonlimiting example in the accompanying drawings, wherein:

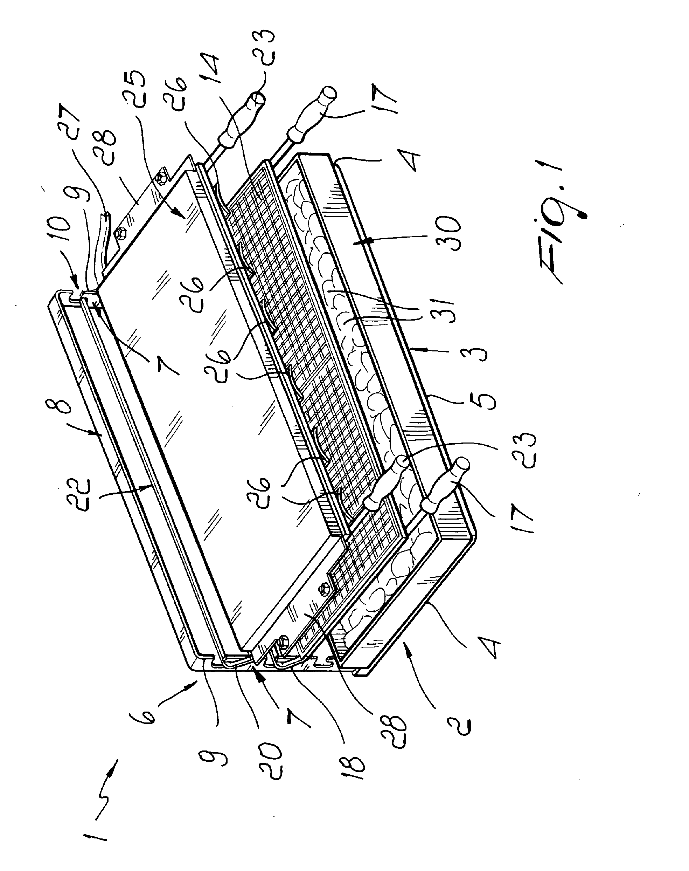

Figure 1 is a front perspective view of a food cooking device according to the invention;

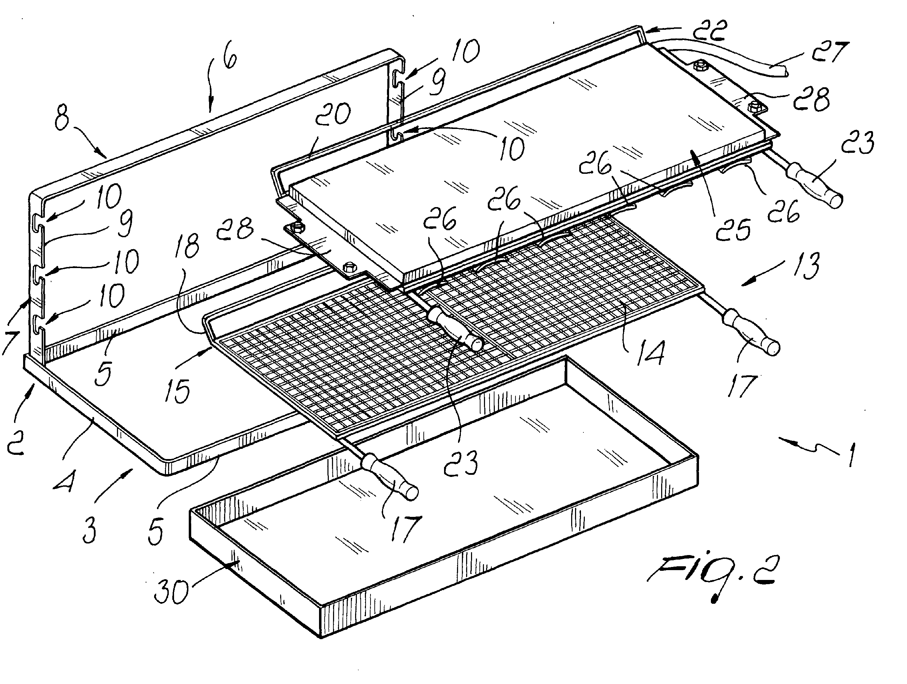

Figure 2 is an exploded perspective view of the food cooking device;
Figures 3 and 4 are side views of the device, in which one of its components is associated in two different positions with respect to the frame of said device;
Figure 5 is an exploded perspective view of a second embodiment of the food cooking device;
Figure 6 is a first perspective view of the device of Figure 5, in which the second support is arranged below the first support;
Figure 7 is a second perspective view of the device of Figure 6, with the first support partially extracted from the frame and with the second support associated therewith in a raised position.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 designates a device for cooking food such as for example meat, fish and sausages.

The device 1 comprises a frame, generally designated by the reference numeral 2, which is approximately L-shaped in a side view.

The frame 2 comprises an annular ridge 3 that has a preferably rectangular base, so as to form a pair of first lateral strips, designated by the reference numeral 4, which are mutually parallel and are connected at their ends approximately at right angles to a pair of second strips, designated by the reference numeral 5.

A connecting element 6 is associated with the annular ridge 3 or rigidly coupled thereto, is approximately shaped like an inverted letter U, and is therefore constituted by two uprights, designated by the reference numeral 7, which protrude upward and at right angles to the internal surface of the respective first strips 4 and are connected in an upper region, at mutually opposite ends, by a cross-member 8 that is perpendicular to them.

One or more pairs of seats 10 are provided frontally at the front edges, designated by the reference numeral 9, of the uprights 7, at least along part of their width; said seats are mutually aligned horizontally and have an approximately G-shaped profile when viewed from the side, so as to allow detachable connection and partial rotation of preset components and/or elements that constitute the device 1.

In the particular described embodiment, three pairs of seats 10, arranged at a chosen mutual distance, have been shown.

A first food support, generally designated by the reference numeral 13, is associable with the frame 2 and comprises a flat grill 14 for supporting the food; the dimensions of the grill are approximately equal to those of the annular ridge 3, and the grill is associated with, or rigidly coupled to, a first supporting element 15 that comprises two first transverse rods 16 that are provided with first handles 17 for grip on the part of the user.

On the opposite side with respect to the first handles 17 there is a second rod 18, which is approximately shaped like an inverted letter U, protrudes upward and is arranged obliquely with respect to the flat grill 14.

The second rod 18 can be arranged selectively at the chosen seat 10 so as to allow to position the flat grill 14 above and approximately parallel to the annular ridge 3.

A second support 21, whose dimensions and footprint are approximately equal to those of the first support 13, is detachably associated with the frame 2 above the first support 13 and at a chosen distance from it.

Accordingly, a plate 25 associated with a second supporting element, designated by the reference numeral 22, whose dimensions and shape are substantially similar to those of the first supporting element 15, is thus formed; two third transverse rods 19 are also provided, and two second handles 23 protrude from the two third rods; on the opposite side, there is a fourth rod 20, which can be positioned selectively in one of the seats 10 arranged above the one with which the second rod 18 interacts.

The plate 25, which is advantageously thermally insulated, supports in a lower region means for transmitting and/or propagating heat toward the underlying first support 13; such means are preferably constituted by a plurality of electric resistors 26, which are arranged mutually in succession at a preset distance from each other transversely to the plate 25.

Each one of the electric resistors 26 has a preferably rectangular plan shape that is approximately as long as the plate 25 is wide, and its transverse cross-section is advantageously curved, with the concavity directed toward the underlying first support 13.

The electric resistors 26 are connected to suitable power supply means, not shown, for example by means of one or more cables 27.

It is also possible to provide alternative heat sources, such as for example one or more gas-fired burners, one or more coiled electric resistors, and one or more radiating plates.

Two flat tabs, designated by the reference numeral 28, protrude laterally from the plate 25, have an approximately Ω-like plan shape, and help to prevent the heat transmitted by the resistors 26 from propagating upward.

The distance between the first support 13 and the second support 21 can be determined selectively by associating said second support at the chosen seat among the seats 10, so as to allow to position particularly bulky foods on the flat grill 14 so as to prevent them from touching the overlying electric resistors 26.

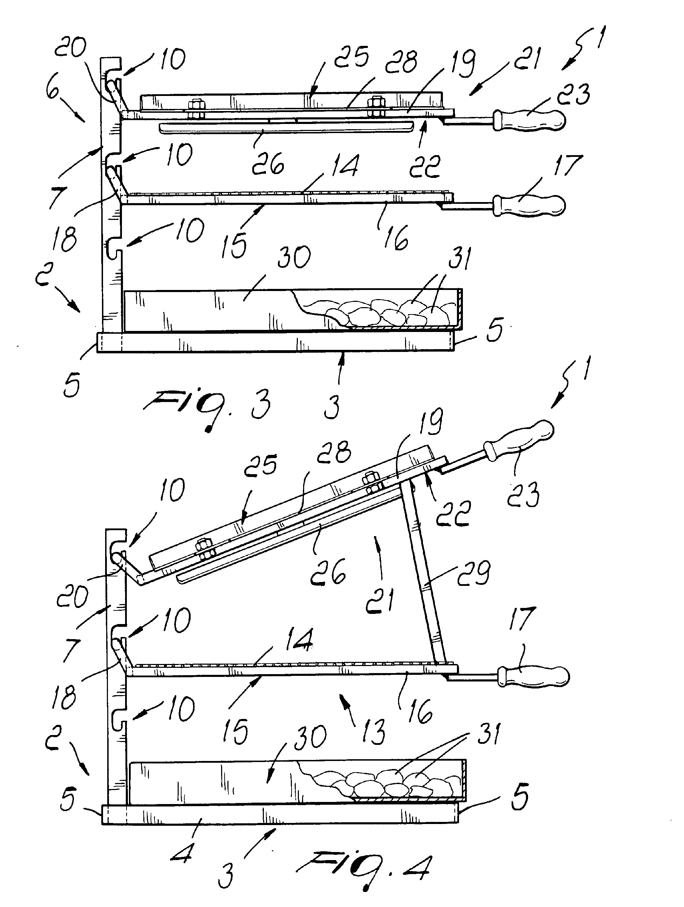

As shown in Figure 4, the rotary connection with respect to the uprights 7 of the frame 2 allows to tilt upward the second support 21, said tilt being stabilized for example by interposing a rod-like spacer 29 between the second support and the first support 13, so as to make it easy for the user to remove and position the food on the flat grill 14 of the first support 13.

A removable tray 30 for containing means for absorbing the residual cooking fat that has dripped off the food during cooking is arranged above the supporting surface and is delimited perimetrically by the first and second strips 4 and 5 of the annular ridge 3; said means are preferably constituted by a plurality of fragments of lava rock, generally designated by the reference numeral 31.

The operation of the invention is as follows: when the one or more cables 27 are connected to the respective sockets, not shown, heat is generated by means of the electric resistors 26 and affects the underlying food, which is arranged at the flat grill 14 and is therefore conveniently spaced at a selectable distance from the overlying heat source, with which it does not make contact.

It has thus been found that the invention has achieved the intended aim and objects, a device having been provided which allows to cook food without placing it in contact with the heat source, allowing to achieve better cooking of the food, since the fat of the food drips toward the underlying tray and is not burnt, thus avoiding the onset of noxious fumes.

It can also be noted that by way of the rotary and detachable connection of the first and second supports to the frame, and by way of the structural simplicity of said frame, such device not only allows rapid disassembly for cleaning but can also be easily moved and/or transported, so that it can be used in different indoor and outdoor environments.

Finally, the possibility to vary the distance between the first and second supports allows to cook foods that have different dimensions, so that the use of the resulting device becomes particularly versatile.

The invention is of course susceptible of numerous modifications and variations, all of which are within the scope of the appended claims.

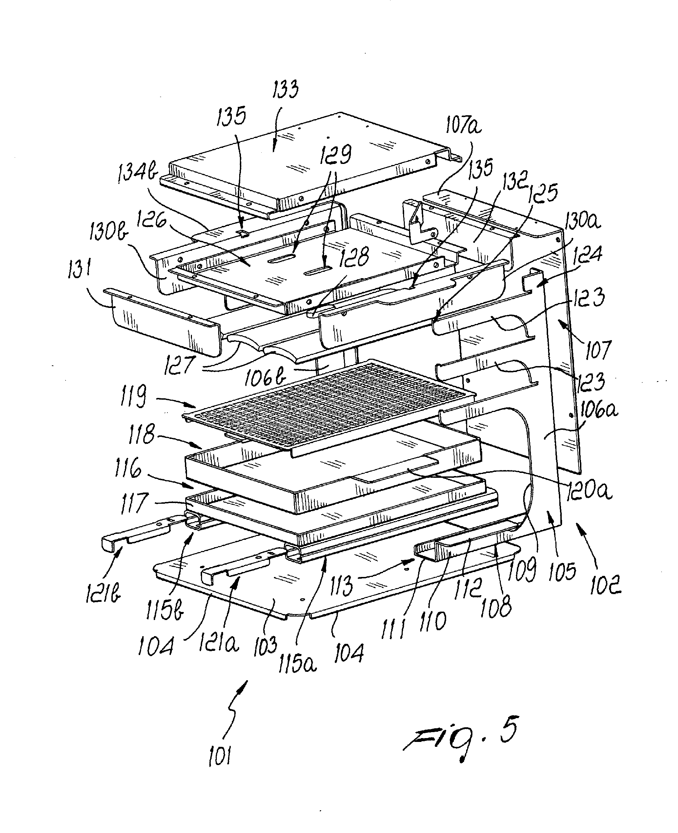

Thus, for example, Figures 5 to 7 illustrate a second embodiment, in which the device 101 comprises a frame 102, which has an approximately L-shaped configuration when viewed from the side and comprises a flat base 103, which has an approximately rectangular plan shape, is preferably rounded at its corners, and has edges 104 that are at least partially folded downward.

A connecting element 105 is associated with, or rigidly coupled to, the base 103 in an upper region and is constituted by two lateral shoulders 106a and 106b, which are parallel to each other, protrude at right angles to the base 103, and are connected at the rear to a back wall 107, which rises along approximately the entire height of the shoulders and has a wing 107a that transversely connects the upper ends of the pair of shoulders 106a and 106b.

The shoulders 106a and 106b have, in a lower region, two feet, each designated by the reference numeral 108, which rest on the base 103 and protrude from the front edges 109 of the shoulders 106a and 106b so as to be mutually parallel, affecting at least part of the length of the base 103.

Each one of the feet 108 constitutes guiding means for a first support 114 and has, in a transverse cross-section, an approximately S-shaped configuration, so as to form a first wing 110, which lies on the same plane as the respective shoulder and is connected at right angles, at its ends, to a second lower wing 111, which is adjacent to the base 103 and to a third upper wing 112, which is parallel to the underlying second wing 111 but is directed away from it.

In the particular embodiment shown, the free end of the second wing 111 of each foot 108 is folded upward so as to form, proximate to the sides of the base 103, a seat or track 113 for inserting and/or extracting slidingly the first food support 114. In greater detail, the first support 114 is constituted by two straight and internally hollow profiled elements 115a and 115b, above which a flat element 116 having a rectangular plan shape is associated, said flat element having a raised perimetric edge 117 that allows to position an overlying tray 118 inside it; a flat grill 119 for supporting the food to be cooked is associable in an upper region with respect to the tray and acts as a covering element for the tray 118.

The tray 118 is provided laterally with two first tabs 120a and 120b, for grip on the part of the user, and is suitable to contain optional means for absorbing the residual fat dripped from the food during cooking; such means are preferably constituted by a plurality of fragments of lava rock, not shown. The profiled elements 115a and 115b have, in a transverse cross-section, a shape that allows them to be inserted slidingly and detachably at the seat or track 113, optionally with the interposition of means suitable to facilitate sliding, such as ball bearings or suitable sliding rollers. Abutment or stroke limiting means are associated with, or rigidly coupled to, the profiled elements 115a and 115b and are preferably constituted by two pawls 12 1 a and 121 b, which are associable with, or rigidly coupled to, the ends of the profiled elements that are directed away from the back wall 107; the two pawls are approximately shaped like an inverted letter L, and their length allows them to keep the first support 114 at a preset distance from the back wall 107 of the frame 102: the ends of the pawls 121a and 121 b are in fact directed toward the edge 104, with which they interact by abutment when the first support 114 is placed adjacent to the back wall 107.

A second support 122 is detachably associable with the frame 102 above the first support 113 and at a chosen distance from it; its dimensions and footprint are approximately equal to those of the first support 114.

In the particular embodiment described there are also, at the front edges 109 of the shoulders 106a and 106b, one or more pairs of tabs or brackets 123, which lie on the same plane as said shoulders, protrude on the opposite side with respect to the back wall, and are provided in pairs so that their upper edge is aligned along a same horizontal plane, so as to form one or more surfaces for the selective resting of the second support 122.

Hollows 124 are provided on the front edges 109 of the shoulders 106a and 106b at the regions for connection to the brackets or tabs 123; on the opposite side, the tabs or brackets 123 have a tooth 125 that protrudes upward at their free end.

The second support 122 is constituted by a flat plate 126, whose plan shape and dimensions are approximately similar to those of the grill 119; said plate supports, in a lower region, means for transmitting and/or propagating heat toward the underlying first support 114; said means are preferably constituted by a plurality of electric resistors 127 arranged mutually in succession at a preset distance from each other, preferably transversely to the plate 126.

Each one of the electric resistors 127 has a preferably rectangular plan shape that is approximately as long as the plate 126 is wide, and its transverse cross-section has an advantageously curved profile in which the concavity is directed toward the underlying first support 114.

The electric resistors 127 are connected to suitable power supply means, not shown, for example by means of one or more cables, also not shown.

It is also possible to provide alternative heat sources, such as for example one or more gas-fired burners, one or more coiled electric resistors, and one or more radiating plates.

In the particular embodiment described, the electric resistors 127 have, approximately at their longitudinal central axis, lugs 128 that protrude upward so that they can be inserted at corresponding slots 129 formed in the plate 126.

Two lateral strips, designated by the reference numerals 130a and 130b, a front strip 131 and a rear strip 132 are associated perimetrically with respect to the plate 126.

A covering panel 133 is further associated in an upper region with the plate 126, and together with the lateral strips 130a and 130b, the front strip 131 and the rear strip 132 and optionally any insulating products, thermally insulates the electric resistors 127, thus preventing the heat generated by the resistors from being dispersed upward and laterally.

Two second flat and horizontal tabs, designated by the reference numerals 134a and 134b, protrude laterally from the lateral strips 132a and 132b and have an approximately T-shaped plan configuration, which allows them to rest at the chosen pair of first tabs or brackets 123 and allows the user to grip them during connection or removal of the second support 122 with respect to the tabs or brackets 123.

The second tabs 134a and 134b further have, approximately halfway along their length, a through hole 135 in which it is possible to insert the tooth 125 of the corresponding pair of tabs or brackets 123, so as to allow the temporary locking and/or centering of the second support 122 with respect to said tabs or brackets.

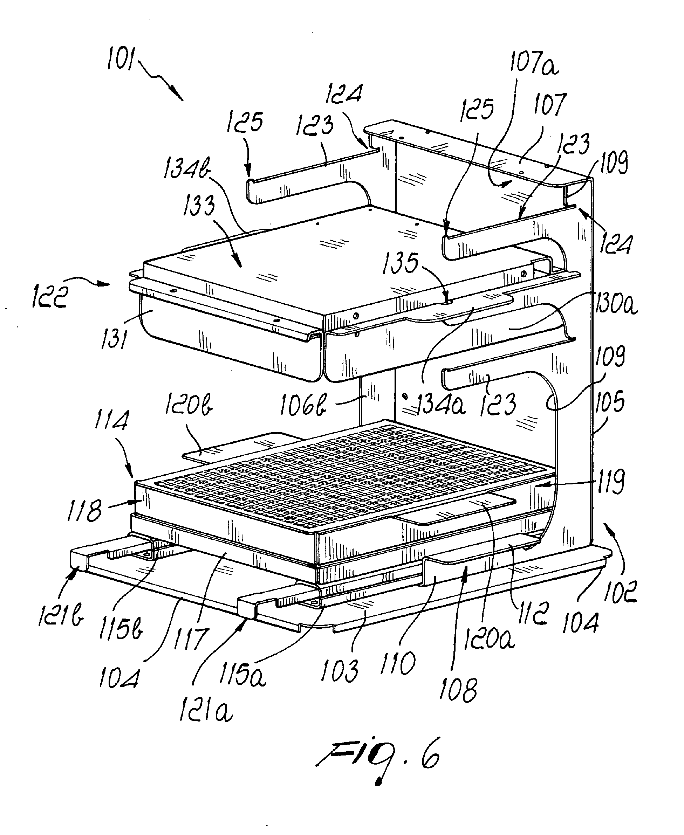

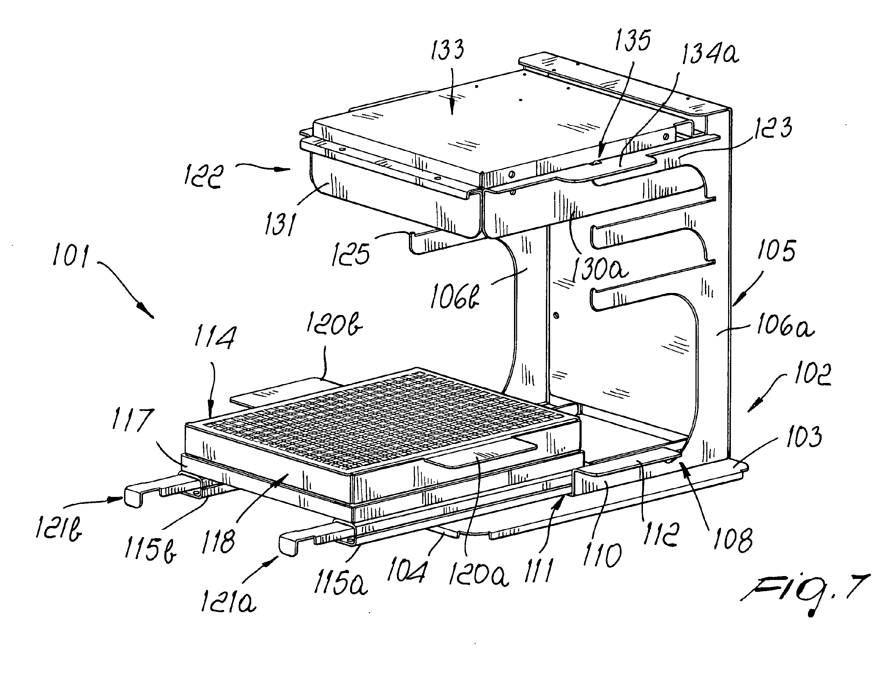

As shown in Figures 6 and 7, when the teeth 125 are inserted in the corresponding holes 135 the rear end of the second tabs 134a and 134b is positioned inside the corresponding notch 124 of the shoulders 106a and 106b, so as to assist the temporary locking and/or centering action of the second support 122 performed by the teeth 135.

The distance between the first support 114 and the second support 122 can be determined selectively by associating the second support 122 at the chosen pair of the pairs of tabs or brackets 123, so as to allow to position particularly bulky food on the flat grill 119, preventing it from touching the overlying electric resistors 127.

This solution, too, achieves the intended aim and objects.

It can also be noted that by virtue of the manner in which the first and second supports are slidingly connected and extracted with respect to the frame, the device, in addition to allowing quick disassembly for cleaning, can also be moved and/or transported easily, so that it can be used in different indoor and outdoor environments.

Finally, the possibility to vary the distance between the first and second supports allows to cook food having different dimensions, so that the use of the resulting device becomes particularly versatile.

The materials used, as well as the dimensions that constitute the individual components of the invention, may of course be more pertinent according to specific requirements.

The various means for performing certain different functions need not certainly coexist only in the illustrated embodiments but can be present per se in many embodiments, including ones that are not illustrated.

The characteristics that have been indicated as advantageous, convenient or the like may also be omitted or be replaced with equivalents.

The disclosures in Italian Patent Applications No. TV2003A000084 and No. TV2003A000147 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A food cooking device, **characterized in that** it comprises a frame with which a first support for said food and at least one second support are associated, said second support being detachably associated with said frame in a position that lies above said first support, at a chosen distance therefrom, and being provided with means for transmitting and/or propagating heat toward said underlying first support.

2. The device according to claim 1, **characterized in that** said first support can be extracted slidingly from said frame until it is arranged at least partially outside the footprint of said overlying second support.

3. The device according to claim 1, **characterized in that** said means for transmitting and/or propagating heat toward said underlying first support are constituted by a plurality of electric resistors that are associated in a lower region with a plate that is thermally insulated.

4. The device according to claims 1 and 3, **characterized in that** said resistors are arranged in mutual succession at a preset distance from each other transversely to said plate.

5. The device according to claims 1 and 4, **characterized in that** each one of said resistors has an approximately rectangular plan shape, which is approximately as long as said plate is wide, and has a transverse cross-section provided with a curved profile in which the concavity is directed toward said underlying first support.

6. The device according to claims 1 and 5, **characterized in that** said electric resistors are connected to suitable power supply means by way of one or more cables.

7. The device according to one or more of the preceding claims, **characterized in that** two flat tabs that have an approximately Ω-shaped plan configuration and are adapted to limit the upward propagation of the heat protrude laterally with respect to said plate.

8. The device according to claims 1 and 7, **characterized in that** said second support can be arranged selectively at a chosen distance from said first support, which is not heated, so that said heat transmission and/or propagation means are spaced from said underlying food.

9. The device according to claim 1, wherein said frame comprises an annular ridge that has a preferably rectangular base, so as to form two first lateral and mutually parallel strips, which are connected at their ends approximately at right angles to two second strips, a connecting element shaped approximately like an inverted letter U being associated with said frame or rigidly coupled thereto, said connecting element being constituted by two uprights that protrude upward and at right angles to the respective internal surfaces of said first strips and are connected to each other at the opposite end in an upper region by a cross-member, **characterized in that** one or more pairs of seats are provided at the front edges of said uprights, at least along part of the height of said uprights, said seats being approximately mutually aligned horizontally and having an approximately G-shaped configuration when viewed from the side, said first and second supports being selectively associable with said seats.

10. The device according to claims 1 and 9, **characterized in that** there are at least three of said one or more pairs of seats, arranged at preset distances from each other.

11. The device according to claims 1, 8 and 10, **characterized in that** the distance between said first and second supports can be determined selectively by associating said second support at the chosen pair of said pairs of seats.

12. The device according to one or more of the preceding claims, **characterized in that** said second support can be inclined selectively upward by interposing a rod-like spacer between said second support and said first support.

13. The device according to claim 1, wherein said first support comprises a flat grill, which is not heated and is designed to support said food and has dimensions that are approximately equal to those of said annular ridge, said flat grill being associated with, or rigidly coupled to, a first supporting element, which comprises two first transverse rods provided with first handles for grip on the part of the user, **characterized in that** on the opposite side with respect to said first handles said first transverse rods are mutually connected by a second rod that is approximately shaped like an inverted letter U, protrudes upward, and is arranged obliquely with respect to said flat grill.

14. The device according to claims 1 and 11, **characterized in that** said second support has dimensions and a footprint that are approximately equal to those of said first support and comprises said plate, which is associated with a second supporting element whose dimensions and configuration are substantially similar to those of said first supporting element.

15. The device according to claims 1 and 14, **characterized in that** said second supporting element is constituted by two third transverse rods, from which a pair of second handles protrudes at one end, a fourth rod protruding at the opposite end and being arrangeable selectively in one of said pairs of seats arranged above the pair of seats with which said second rod of said first supporting element interacts.

16. The device according to claim 1, **characterized in that** means for absorbing the fat dripped from the food during cooking are detachably associated with said frame below said first support.

17. The device according to one or more of the preceding claims, **characterized in that** said frame is approximately L-shaped when viewed laterally and comprises a flat base that has an approximately rectangular plan shape and with which a connecting element is associated or rigidly coupled in an upper region, said connecting element being constituted by two shoulders that are parallel to each other and protrude to the sides and at right angles with respect to said base, said pair of shoulders being connected at the rear to a back wall that rises for approximately the entire height of said shoulders and has a wing for connection between the upper ends of said pair of shoulders.

18. The device according to claims 1, 2 and 17, **characterized in that** two feet protrude from said shoulders at said base, said feet being arranged parallel to each other so as to affect at least part of the length of said base, each one of said two feet constituting guiding means for said first support.

19. The device according to claims 1, 2 and 18, **characterized in that** each one of said two feet has, in a transverse cross-section, an approximately S-shaped configuration, so as to form a first wing, which lies on the same plane as the respective shoulder and is connected at right angles at its ends to a second lower wing, which is adjacent to said base, and to a third upper wing, which is parallel to said underlying second wing but is directed away from it, the free end of said second wing being folded upward so as to form, proximate to the sides of said base, a seat or track for the sliding insertion and/or extraction of said first support.

20. The device according to claims 1, 2 and 19, **characterized in that** said first support is constituted by two straight and internally hollow profiled elements, above which a flat element having a rectangular plan shape is associated, said flat element being provided with a raised perimetric edge that allows to position inside it a tray with which a flat grill for supporting the food to be cooked can be associated in an upper region, said tray being provided laterally with two first tabs for grip on the part of the user and being suitable to contain optional means for absorbing the residual fat dripped from the food during cooking, said means being constituted by a plurality of fragments of lava rock.

21. The device according to claims 1, 2 and 20, **characterized in that** said pair of profiled elements has, in a transverse cross-section, a configuration that allows its sliding and/or removable insertion at said seat or track, with the interposition of means adapted to facilitate sliding, such as ball bearings or appropriately provided sliding rollers.

22. The device according to claims 1, 2 and 21, **characterized in that** abutment or stroke limiting means are associated with, or rigidly coupled to, said pair of profiled elements.

23. The device according to claims 1, 2 and 22, **characterized in that** said abutment or stroke limiting means are constituted by two pawls, which are shaped like an inverted letter L and are associable with, or rigidly coupled to, the ends of said profiled elements that are directed away from said back wall, each one of said two pawls having an end that is directed toward the edge of said base with which they interact by abutment when said first support is arranged adjacent to said back wall.

24. The device according to claims 1, 2 and 23, **characterized in that** one or more pairs of tabs or brackets protrude at said front edges of said pair of shoulders and lie on the same plane as said pair of shoulders, said one or more pairs of tabs or brackets protruding in the opposite direction with respect to said back wall and being aligned in pairs, with their upper edge, along a same horizontal plane, so as to form one or more surfaces for the selective resting of said second support.

25. The device according to claims 1, 2 and 24, **characterized in that** hollows are formed on said front edges of said shoulders at the regions for connection to said one or more pairs of tabs or brackets, said one or more pairs of tabs or brackets having, on the opposite side with respect to said hollows, a tooth that protrudes upward at their free end.

26. The device according to claims 1, 2 and 25, **characterized in that** said means for transmitting and/or propagating heat toward said underlying first support are preferably constituted by a plurality of electric resistors, which are associated below a flat plate that has, in plan view, a configuration and dimensions that are approximately similar to those of said flat grill, said electric resistors having, approximately at their longitudinal central axis, lugs that protrude upward so that they can be inserted at complementarily shaped slots formed in said underlying plate.

27. The device according to claims 1, 2 and 26, **characterized in that** two lateral strips, a front strip and a rear strip are associated perimetrically with said plate, a covering panel being further associated with said plate in an upper region and providing, together with said lateral strips, said front strip and said rear strip and optionally insulating products, thermal insulation of said electric resistors, thus preventing the heat produced by them from dispersing upward and laterally.

28. The device according to claims 1, 2 and 27, **characterized in that** two second flat and horizontal tabs protrude laterally from said two lateral strips and have an approximately T-shaped plan configuration, said tabs being adapted to allow them to rest at the chosen pair of said tabs or brackets and to allow the user to grip them during connection or removal of said second support with respect to said tabs or brackets.

29. The device according to claims 1, 2 and 28, **characterized in that** said second tabs further have, approximately halfway along their length, a through hole in which it is possible to insert said tooth of the corresponding pair of said one or more pairs of tabs or brackets, so as to allow temporary locking and/or centering of said second support with respect to them, the insertion of said teeth at said holes being matched by the arrangement of the rear end of said second tabs within said notches of said pair of shoulders.

30. The device according to claims 1, 2 and 29, **characterized in that** the distance between said first support and said second support can be determined selectively by associating said second support at the chosen pair of said one or more pairs of tabs or brackets.
